# EUROPEAN PATENT SPECIFICATION

(11) **EP 0 613 844 B1**
(45) Date of publication and mention of the grant of the patent: **03.09.1997**
(21) Application number: 94103105.6
(22) Date of filing: 02.03.1994
(51) Int. Cl.: B65G 49/08

(54) **Apparatus for sorting, forming and removing stacks of ceramic tiles in multiple shapes**
Vorrichtung zum Sortieren, Bilden und Transportieren von Stapeln keramischer Ziegel in verschiedenen Formen
Dispositif pour trier, former et transporter des piles de tuile céramique de formes différentes

(30) Priority: 04.03.1993 IT MO930022
(43) Date of publication of application: 07.09.1994
(73) Proprietor: SYSTEM CERAMICS S.p.A., I-41042 Fiorano, Modena (IT)
(72) Inventor: Stefani, Franco, I-41049 Sassuolo (Modena) (IT)
(74) Representative: Modiano, Guido, Dr.-Ing.

(56) References cited:
- DE-A- 2 021 485
- DE-B- 1 098 425
- DE-B- 2 228 726

## Description

The present invention relates to an apparatus for sorting, forming and removing stacks of ceramic tiles in multiple shapes.

The automatic handling of ceramic tiles currently uses machines that in order to form the stacks meant for various processing steps pick up said tiles by means of a series of pneumatically-operated suckers which are connected to the arms of a mechanical carousel which is actuated so that it rotates and around which the various stacking stations are located.

These known machines have the general prerogative of moving the tiles gently, without causing impacts and damage to them, and of automatically dividing said tiles into separate stacks on the basis of the so-called "choice" to which each tile belongs.

These known machines work very well but are susceptible of further improvements that make them operate not only rotationally but also in a linear manner, so that they are more versatile in use. Known machines furthermore have considerable dimensions, and their arms that form the carousel are very long, producing very high peripheral rotation speeds in addition to occupying a considerable amount of space.

Furthermore, very tall stacks are currently formed when handling small tiles, and therefore the rise of the center of gravity of said stacks causes them to be highly unstable.

DE-A-2 021 485 discloses a stack moving apparatus including a pickup line having sucker units and being feedable with a feeder conveyor. A first station is positioned for unloading of the feeder conveyor to the pickup line and a second station is positioned for unloading from the pickup line to a removal conveyor via a stacking table.

The technical aim of the present invention is to obviate the shortcomings of the prior art by providing an apparatus for sorting, forming and removing stacks of ceramic tiles in multiple sizes that allows to also work along straight lines and absolutely independently of structural restrictions, at the same time ensuring great stability to the formed stacks.

This aim and other objects are achieved by an apparatus for sorting, forming and removing stacks of ceramic tiles in multiple sizes, as defined in the appended claims.

Further characteristics and advantages of the invention will become apparent from the description of a preferred but not exclusive embodiment of an apparatus for forming and sorting stacks of flat products, illustrated only by way of non-limitative example in the accompanying drawings, wherein:

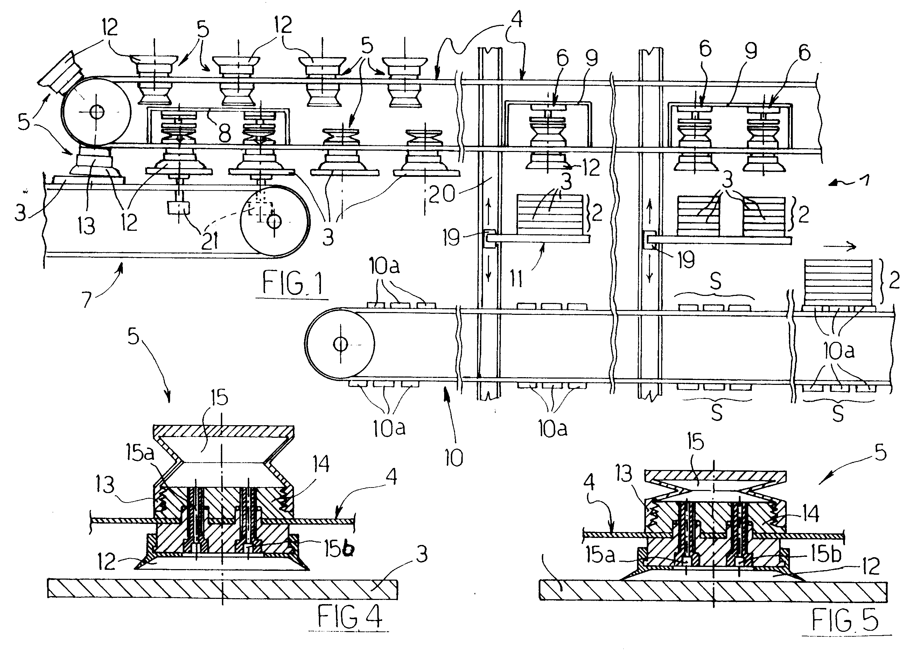

figure 1 is a schematic view of a preferred embodiment of the invention;

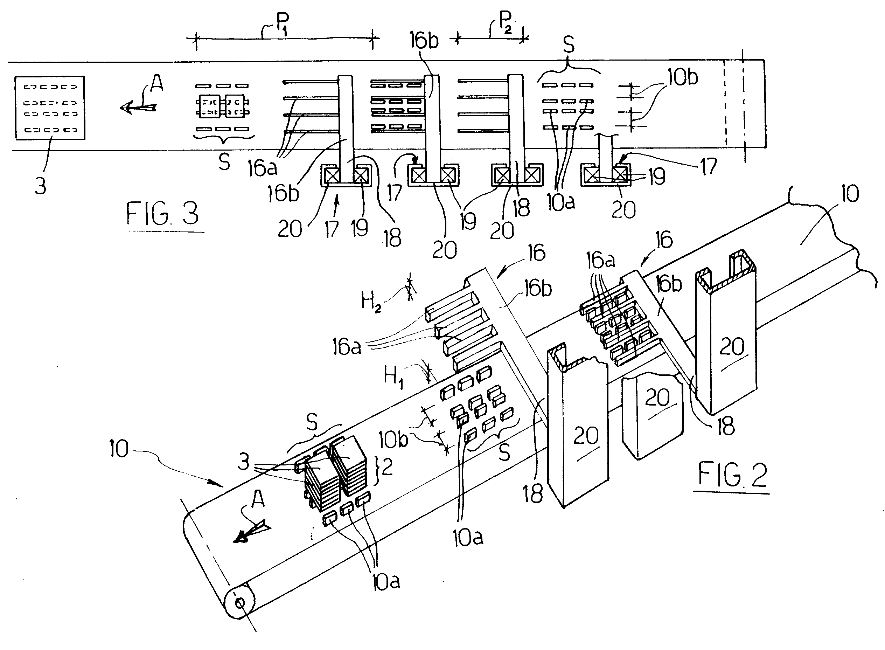

figure 2 is a schematic perspective view of the means for accumulating and depositing on a conveyor for removing the stacked ceramic tiles;
figure 3 is a plan view of said means of figure 2 in operating configurations;
figures 4 and 5 are schematic sectional views of a sucker unit in two configurations, respectively an inactive one and an active one.

With particular reference to the above figures, the reference numeral 1 designates an apparatus for sorting, forming and removing stacks 2 of ceramic tiles 3 in multiple sizes which comprises a pickup line 4 for the tiles 3 which has a plurality of mutually independent sucker units 5 that can be activated or deactivated at corresponding activation and deactivation stations 8 and 9 by using suitable actuation means 6.

The pickup line 4 is fed by a conventional feeder conveyor 7; said activation station 8 is located at its unloading end.

The deactivation station 9, which may not be the only one but may be combined with other identical ones arranged in a linear succession, is provided along said pickup line 4 in a section where the loading end of a removal conveyor 10 is located; said removal conveyor is arranged below said line 4 and is axially aligned with it, so that it runs below it over a common extent; said conveyor 10, which is preferably of the belt type, is furthermore provided with series S of pads 10a which are rigidly coupled to the active face in a known manner and are arranged in rows and columns that form gaps 10b that have a preset width; said series S of pads 10a are also distributed in succession on the conveyor 10 with a preset pitch P₁.

Means 11 for accumulating and depositing the tiles 3 stacked on said conveyor 10 are mounted in each one of said deactivation stations 9 (hereinafter termed briefly stations 9).

Each one of the sucker units 5 (hereinafter termed briefly units 5) is constituted by a cup-shaped element 12 made of flexible material that is suitable to be placed in contact with the surface of the corresponding tile 3 and is rigidly coupled to a box-like body 13 which is axially deformable in an elastic manner and is hollow; the element 12 is connected to said body 13.

Internally, said box-like body 13 forms, between its top and a rigid base block 14, a bellows-shaped chamber 15 which is elastically deformable and is connected to said cup-shaped element 12 by means of two ducts 15a, 15b.

The accumulation and deposition means 11 are constituted by a frame which is essentially shaped like a horizontal comb 16; the parallel teeth 16a of said comb are directed in the advancement direction A of the removal conveyor 10, and the cross-member 16b that joins said teeth is arranged at right angles to this direction.

The comb 16 is suitable to snugly insert its teeth 16a in the gaps 10b formed between the pads 10a by means of a vertical movement that can be produced by virtue of elements 17 that include a horizontally cantilevered arm 18 which forms, without discontinuities, said cross-member 16b, connecting it to a slider 19 which is guided so that it can slide and is motorized in a conventional manner inside a vertical guide 20 arranged on one side of the conveyor 10.

The pitch P₁ with which the series of pads 10a are distributed is equal to at least twice, plus a slight clearance, the total height P₂ of the comb 16 projected on the horizontal plane, and the vertical extension H₁ of the pads 10a is slightly greater than the thickness H₂ of the teeth 16a of said comb 16.

Operation of the apparatus according to the invention is automatic and is provided by using conventional-type drives and control elements and occurs as follows: the feeder conveyor 7 carries the tiles 3, advancing in steps up to its unloading end where the station 8 for activating the sucker units 5 is located; said sucker units, carried by the pickup line 4, move in step with the advancement of the tiles 3 carried by said conveyor 7.

In the activation station 8, the actuators 6 individually or simultaneously compress the box-like bodies 13 of said units 5, causing the compression of the bellows-like chamber 15 and thus generating, by means of the ducts 15a and 15b, suction in the cup-shaped element 12; at the same time, corresponding actuators 21 located below the active portion of the conveyor 7 raise the tile or tiles 3 in a known manner without interfering with the conveyor until they are in contact with the cup-shaped element 12, to which they remain coupled by virtue of the above mentioned suction.

The actuators 21 then retract below said active portion of the conveyor 7, and the line 4 advances, moving the picked-up tiles 3 toward the respective accumulation means 11 in order to deposit them on said means, forming on each means one or more stacks 2 of tiles 3.

In each deactivation station 9, other actuation means 6, fully similar to those installed in the stations 8, provide a rapid overpressure pulse to the box-like bodies 13 when said bodies are coaxially coincident; during the movement of the line 4, these bodies in turn maintain their axially compressed configuration, retaining the tiles 3 by suction against the cup-shaped elements 12; said pulse produces an instantaneous increase in the axial deformation of the bellows-like chamber 15, by virtue of which the negative pressure inside the cup-shaped element 12 is eliminated, causing the immediate separation of the tiles 3 and the simultaneous elongation of the box-like bodies 13; the tiles are thus deposited on the comb 16, forming as mentioned one or more stacks 2 on it.

For every tile 3 that is deposited, said comb 16, which is supported by the arm 18, descends by an extent that is equal to the thickness of said tile 3 and is controlled in this descent by a known detector that allows to count the number of stacked tiles until a presettable quantity is reached; once this quantity has been reached, the comb 16 descends toward the removal conveyor 10, inserting its teeth 16a in the gaps 10b formed between the rows and columns of the pads 10a and releasing onto said pads, by virtue of the lower thickness H₂ of the teeth 16a, the stack or stacks 3 formed on said teeth.

Since the apparatus 1 normally works by using multiple combs 16 that act in succession, the center distance P₁ between two contiguous series S of pads 10a is equal to at least twice, plus a slight clearance, the height P₂ that the horizontal comb 16 has in a plan view; this allows to deposit in succession on the removal conveyor 10 a plurality of stacks 2 of tiles 3 without causing the tiles deposited upstream to interfere with the comb or combs located directly downstream during their deposition step.

In practice, with reference to only two combs arranged in succession along the conveyor 10 for the sake of simplicity, the comb located upstream deposits its stacks 2 onto an underlying series S of pads 10a and the conveyor 10 advances by a pitch P₁, unloading said upstream comb and transferring the stack(s) 2 vertically above the downstream comb 16, which is kept in raised position to complete the forming of its own stack 2.

The conveyor 10 then moves by an additional pitch P₁, causing the further advancement of the stack 2 deposited by the active region of the downstream comb and allowing said downstream comb to descend in order to deposit, in turn, the formed stack 2 onto a successive series S of unoccupied pads 10a that, by means of the second pitch P₁, have located themselves vertically below said comb; in the meantime, the upstream comb 16 rises to start a new step for the accumulation of tiles 3.

The described operating sequence can also be performed by using three or more combs 16, controlling the ascending and descending motions of each comb so that downstream of a deposited stack there is never any interference with a comb that is depositing on the removal conveyor 10.

In practice it has been observed that the described invention achieves the intended aim and objects.

The apparatus according to the invention thus conceived is susceptible of numerous modifications and variations. Thus, for example, the deactivation stations 9 can be several, like the corresponding combs 16; furthermore, stacks of different heights and in different numbers can furthermore be formed on said frames depending on the format of the tiles being handled, in order to avoid instabilities.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for sorting, forming and removing stacks (2) of ceramic tiles (3) in multiple sizes, comprising a tile pickup line (4) that has a multiplicity of mutually independent sucker units (5) that can be activated/deactivated at corresponding stations (8,9) provided with actuation means (6), wherein said line (4) is feedable in step by step advancement by means of a conventional tile feeder conveyor (7), at the unloading end of which there is at least one first station (8) for the activation of the sucker units (5), at least one second station (9) for their deactivation being provided vertically above the active portion of an additional conveyor (10) for removing the formed stacks which is arranged below and aligned with said pickup line (4), and which has stack supporting elements (10a) which are distributed with a preset pitch (P₁) on the removal conveyor (10) for supporting tiles in one or more stacks, means (11) for accumulating and depositing the stacked tiles being interposed between said pickup line (4) and said removal conveyor (10) such that tiles are accumulated on said means (11) which subsequently move to deposit the accumulated tiles on said stack supporting elements (10a) arranged on the removal conveyor (10).

2. Apparatus according to claim 1, characterized in that each one of said sucker units (5) is constituted by a cup-shaped element (12) made of flexible material for contact with the tiles which is connected to an axially deformable box-like body inside which there is a bellows-like chamber (15), the axial compression or elongation of said chamber and consequently of said box-like body producing negative pressure inside the cup-shaped element.

3. Apparatus according to claim 2, characterized in that said bellows-like chamber (15) is formed between the top of said box-like body (13) and a base block (14) which is preset for coupling to the pickup line (4) and is crossed by respective ducts (15a,15b) for connecting said chamber and the internal cavity of the cup-shaped element.

4. Apparatus according to any one or more of the preceding claims, characterized in that said elements for supporting the stacks of tiles are constituted by successive series (S) of pads (10a) which are arranged in rows and columns and are rigidly coupled in a known manner on the active supporting face of the removal conveyor (10), gaps (10b) of preset width being formed between said rows and said columns.

5. Apparatus according to any one or more of the preceding claims, characterized in that said distribution pitch (P₁) of the successive series (S) of pads (10a) is equal to at least twice the total horizontal space occupation (P₂) of the accumulation and deposition means (11).

6. Apparatus according to any one or more of the preceding claims, characterized in that said means (11) for accumulating and depositing the stacked tiles are constituted by a quadrangular frame (16) that forms a horizontal comb which provides a horizontal supporting surface for the stacks (2) of tiles (3), the teeth (16a) of said comb being parallel to the advancement direction (A) of the removal conveyor, the joining cross-member (16b) of said comb being arranged at right angles to said direction and upstream with respect to the teeth, said teeth being suitable to snugly enter, with vertical movements that can be produced by means of appropriate elements (17), the gaps (10b) formed between the rows and columns of pads on the active portion of the removal conveyor.

7. Apparatus according to claim 6, characterized in that said elements (17) for the vertical movement of the horizontal comb-like frame include a substantially horizontal cantilevered arm (18) that forms, without discontinuities, said cross-member (16b) that connects the teeth (16a), one of its ends being associated with a slider (19) that is guided so that it can slide and is motorized in a conventional manner in a vertical guide (20).

8. Apparatus according to any one or more of claims 6 and 7, characterized in that the vertical extension (H₁) of the pads is slightly greater than the thickness (H₂) of the teeth (10a) of the horizontal comb (16), said teeth (16a) being suitable to fit flush between the pads (10a) in the gaps (10b) formed between them.

## Patentansprüche

1. Vorrichtung zum Sortieren, Bilden und Weiterbefördern von Stapeln (2) keramischer Ziegel (3) in verschiedenen Größen, die ein Aufnahmeband (4) umfaßt, das eine Vielzahl von voneinander unabhängigen Ansaugeinheiten (5) besitzt, die an entsprechenden Stationen (8,9), die mit Betätigungsmitteln (6) versehen sind, aktiviert bzw. deaktiviert werden können, wobei das besagte Band (4) in schrittweiser Bewegung durch Mittel eines konventionellen Ziegelzufuhrförderers (7) beschickbar ist, an dessen Entladeende sich wenigstens eine erste Station (8) zur Aktivierung der Ansaugeinheiten (5) befindet, und für deren Deaktivierung wenigstens eine zweite Station (9) senkrecht über dem aktiven Abschnitt eines zusätzlichen Förderers (10) zum Weiterfördern der gebildeten Stapel vorgesehen ist, der unter dem besagten Aufnahmeband (4) angeordnet und daran ausgerichtet ist, und Elemente (10a) zum Tragen der Stapel aufweist, die mit einem vorgegebenen Abstand (P1) auf dem Weiterförderer (10) verteilt sind, um Ziegel in einem oder mehreren Stapeln zu tragen, Mittel (11) zum Ansammeln und Abstellen der gestapelten Ziegel, die derart zwischen dem besagten Aufnahmeband (4) und dem besagten Weiterförderer (10) angebracht sind, daß Ziegel auf den besagten Mitteln (11) angesammelt werden, die sich daraufhin bewegen, um die angesammelten Ziegel auf den besagten Elementen (10a) zum Tragen der Stapel, die auf dem Weiterförderer (10) angebracht sind, abzuladen.

2. Vorrichtung nach Anspruch 1, dadurch gekennzeichnet, daß jede der Ansaugeinheiten (5) von einem tassenförmigen, aus einem für den Kontakt mit den Ziegeln flexiblem Material hergestellten Element (12) gebildet wird, das mit einem axial verformbaren, kastenförmigen Gehäuse verbunden ist, in dem sich eine glockenartige Kammer (15) befindet, wobei die axiale Kompression oder Verlängerung der besagten Kammer und infolge dessen des kastenförmigen Gehäuses einen Unterdruck innerhalb des tassenförmigen Elements hervorruft.

3. Vorrichtung nach Anspruch 2, dadurch gekennzeichnet, daß die besagte glockenartige Kammer (15) zwischen dem Oberteil des kastenförmigen Gehäuses (13) und einem Grundteil (14) besteht, das zur Kopplung an das Aufnahmeband (4) vorgegeben und mit entsprechenden Kanälen (15a,15b) durchzogen ist, um die besagte Kammer und die innere Ausnehmung des tassenförmigen Elements zu verbinden.

4. Vorrichtung nach wenigstens einem der vorhergehenden Ansprüche, dadurch gekennzeichnet, daß die besagten Elemente zum Tragen der Stapel von Ziegeln von aufeinanderfolgenden Anreihungen (S) von Unterlagen (10a) gebildet werden, die in Reihen und Spalten angeordnet und starr auf bekannte Weise an die aktive tragende Seite des Weiterförderers (10) angekoppelt sind, wobei Lücken (10b) mit einer vorgegebenen Weite zwischen den besagten Reihen und Spalten gebildet werden.

5. Vorrichtung nach wenigstens einem der vorhergehenden Ansprüche, dadurch gekennzeichnet, daß der besagte Abstand (P1) der Verteilung der aufeinanderfolgenden Aneinanderreihung (S) von Unterlagen (10a) mindestens doppelt so groß ist wie der gesamte horizontale Platzbedarf (P2) der Mittel (11) zum Ansammeln und Abstellen.

6. Vorrichtung nach wenigstens einem der vorhergehenden Ansprüche, dadurch gekennzeichnet, daß die besagten Mittel (11) zum Ansammeln und Abstellen der gestapelten Ziegel von einem viereckigen Rahmen (16) gebildet werden, der einen horizontalen Kamm bildet, der eine horizontale tragende Fläche für die Stapel (2) von Ziegeln (3) schafft, wobei die Zähne (16a) des besagten Kammes parallel zu der Bewegungsrichtung (A) des Weiterförderers sind, wobei der Rückenteil (16b) des besagten Kammes rechtwinklig zu der besagten Richtung und in Bewegungsrichtung aufwärts von den Zähnen angeordnet ist, wobei die besagten Zähne dazu geeignet sind, mit senkrechten Bewegungen, die von Mitteln entsprechender Elemente (17) erzeugt werden, schlüssig in die Lücken (10b) einzufahren, die zwischen den Reihen und Spalten der Unterlagen auf dem aktiven Abschnitt des Weiterförderers geformt sind.

7. Vorrichtung nach Anspruch 6, dadurch gekennzeichnet, daß die besagten Elemente (17) für eine senkrechte Bewegung des horizontalen, kammförmigen Rahmens einen im wesentlichen horizontalen freitragenden Arm (18) umfassen, der ohne Unterbrechungen das Rückenteil (16b) bildet, das die Zähne (16a) verbindet, wobei eines seiner Enden mit einem Schlitten (19) in Verbindung steht, der so geführt ist, daß er in einer vertikalen Führung (20) gleitet und auf konventionelle Weise angetrieben ist.

8. Vorrichtung nach wenigstens einem der Ansprüche 6 und 7, dadurch gekennzeichnet, daß die vertikale Ausdehnung (H1) der Unterlagen geringfügig größer ist als die Dicke (H2) der Zähne (10a) des horizontalen Kammes (16), wobei die besagten Zähne (16a) dazu geeignet sind, bündig zwischen die Unterlagen (10a) in die dazwischen gebildeten Lücken (10b) zu passen.

## Revendications

1. Appareil pour trier, former et retirer des piles (2) de tuiles en céramique (3) de dimensions multiples, comprenant une ligne de prélèvement (4) des tuiles qui présente une multiplicité d'unités d'aspiration mutuellement indépendantes (5) qui peuvent être activées/désactivées à des postes correspondants (8,9) munis de moyens d'actionnement (6), dans lequel ladite ligne (4) est susceptible d'être alimentée en une avance pas à pas par l'intermédiaire d'un transporteur d'alimentation de tuiles usuel (7), à l'extrémité de déchargement duquel se trouve au moins un premier poste (8) pour l'actionnement des unités d'aspiration (5), au moins un second poste (9) pour leur désactivation étant prévu verticalement au-dessus de la partie active d'un transporteur additionnel (10) pour retirer les piles formées, qui est agencé au-dessous de et aligné avec ladite ligne de prélèvement (4), et qui présente des éléments de support de piles (10a) qui sont répartis selon un pas prédéterminé (P1) sur le transporteur de retrait (10) pour supporter les tuiles en une ou plusieurs piles, des moyens (11) pour accumuler et déposer les tuiles empilées étant disposés entre ladite ligne de prélèvement (4) et ledit transporteur de retrait (10), de sorte que des tuiles sont accumulées sur lesdits moyens (11) qui se déplacent par la suite pour déposer les tuiles accumulées sur lesdits éléments de support de piles (10a) agencés sur le transporteur de retrait (10).

2. Appareil selon la revendication 1,
caractérisé en ce que chacune desdites unités d'aspiration (5) est constituée par un élément en forme de coupe (12) réalisé en une matière souple pour le contact avec les tuiles, qui est relié à un corps en forme de boîtier axialement déformable à l'intérieur duquel se trouve une chambre en forme de soufflet (15), la compression ou l'allongement axial de ladite chambre et en conséquence dudit corps en forme de boîtier produisant une pression négative à l'intérieur de l'élément en forme de coupe.

3. Appareil selon la revendication 2,
caractérisé en ce que ladite chambre en forme de soufflet (15) est formée entre le haut dudit corps en forme de boîtier (13) et un bloc de base (14) qui est préréglé pour la liaison à la ligne de prélèvement (4) et est traversé par des conduits respectifs (15a,15b) pour relier ladite chambre et la cavité interne de l'élément en forme de coupe.

4. Appareil selon l'une ou plusieurs des revendications précédentes,
caractérisé en ce que lesdits éléments pour supporter les piles de tuiles sont constitués par des séries successives (S) de patins (10a) qui sont agencés en rangées et en colonnes et sont rigidement couplés d'une manière connue sur la face de support actif du transporteur de retrait (10), des espaces (10b) de largeur prédéterminée étant réalisés entre lesdites rangées et lesdites colonnes.

5. Appareil selon l'une ou plusieurs des revendications précédentes,
caractérisé en ce que ledit pas de distribution (P₁) des séries successives (S) de patins (10a) est égal à au moins deux fois l'occupation de l'espace horizontal total (P₂) des moyens d'accumulation et de dépôt (11).

6. Appareil selon l'une ou plusieurs des revendications précédentes,
caractérisé en ce que lesdits moyens (11) pour accumuler et déposer les tuiles empilées sont constitués par un bâti quadrangulaire (16) qui forme un peigne horizontal qui fournit une surface de support horizontale pour les piles (2) de tuiles (3), les dents (16a) dudit peigne étant parallèles à la direction d'avance (A) du transporteur de retrait, l'organe transversal de jonction (16b) dudit peigne étant agencé à angle droit par rapport à ladite direction et en amont par rapport aux dents, lesdites dents étant appropriées pour entrer, de façon ajustée, avec des mouvements verticaux qui peuvent être produits par l'intermédiaire d'éléments appropriés (17), dans les espaces (10b) formés entre les rangées et colonnes de patins sur la partie active du transporteur de retrait.

7. Appareil selon la revendication 6,
caractérisé en ce que lesdits éléments (17) pour le mouvement vertical du bâti horizontal en forme de peigne inclut un bras en porte à faux sensiblement horizontal (18) qui forme, sans discontinuité, ledit organe transversal (16b) qui relie les dents (16a), l'une de ses extrémités étant associée à un coulisseau (19) qui est guidé de sorte qu'il peut coulisser et est motorisé d'une manière usuelle dans un guide vertical (20).

8. Appareil selon l'une ou plusieurs des revendications 6 et 7,
caractérisé en ce que l'extension verticale (H₁) des patins est légèrement plus grande que l'épaisseur (H₂) des dents (10a) du peigne horizontal (16), lesdites dents (16a) étant appropriées pour s'adapter à niveau entre les patins (10a) dans les espaces (10b) formés entre eux.
